Europäisches Patentamt

European Patent Office

Office européen des brevets

(11) Numéro de publication : **0 431 995 B1**

## (12) FASCICULE DE BREVET EUROPEEN

(45) Date de publication du fascicule du brevet :
02.03.94 Bulletin 94/09

(21) Numéro de dépôt : **90403204.2**

(22) Date de dépôt : **12.11.90**

(51) Int. Cl.⁵ : **A23L 1/09,** A23L 1/236,
A23G 3/30

(54) **Composition édulcorante concentrée utilisable dans les produits alimentaires.**

Le dossier contient des informations
techniques présentées postérieurement au
dépôt de la demande et ne figurant pas dans le
présent fascicule.

(30) Priorité : **13.11.89 FR 8914850**

(43) Date de publication de la demande :
**12.06.91 Bulletin 91/24**

(45) Mention de la délivrance du brevet :
**02.03.94 Bulletin 94/09**

(84) Etats contractants désignés :
**AT BE CH DE DK ES GB GR IT LI LU NL SE**

(56) Documents cités :
EP-A- 0 082 670
EP-A- 0 086 856
EP-A- 0 094 292
EP-A- 0 196 641

(56) Documents cités :
GB-A- 2 166 637
US-A- 4 250 196
DATABASE WPIL/DERWEN, accession no.
83-744974 (34), 1983, Derwent Publications
Ltd, London, GB; & JP-A-57005645
DATABASE WPIL/DERWENT, accession no.
82-57829E (28), 1982, Derwent Publications
Ltd., London, GB; & JP-A-57012957

(73) Titulaire : **Roquette Frères**
**F-62136 Lestrem (FR)**

(72) Inventeur : **Mentink, Léon**
**96 Rue du Collège**
**F-59940 Estaires (FR)**
Inventeur : **Serpelloni, Michel**
**155 Route Nationale**
**F-62660 Beuvry-Les-Bethune (FR)**

(74) Mandataire : **Koch, Gustave et al**
**Cabinet Plasseraud 84, rue d'Amsterdam**
**F-75440 Paris Cédex 09 (FR)**

## Description

L'invention a pour objet une composition édulcorante concentrée utilisable dans les produits alimentaires et notamment dans les articles de confiserie tels que les fondants, les fourrages, les bonbons gélifiés, les fruits confits, les solutions de dragéification et les chewing-gums.

Elle vise également les produits alimentaires, notamment les chewing-gums, contenant ladite composition.

Il est connu que les chewing-gums traditionnels, qui comportent du saccharose et du sirop de glucose, et les chewing-gums "sans sucre", qui sont à base de polyols, sont essentiellement constitués d'environ:

- 20 à 30% de gomme base (élastomères du type polyisoprène),
- 4 à 70% d'hydrates de carbone sous forme pulvérulente,
- 0 à 25% de sirops d'hydrates de carbone constituant la fraction liquide du chewing-gum,
- 1% d'arôme,
- 0 à 5% d'autres ingrédients du groupe comprenant les antioxydants, les colorants, les édulcorants intenses, les agents de charge et les émulsifiants,

le terme "hydrate de carbone" désignant

- d'une part, les glucides tels que les mono-, di-, oligo- et polysaccharides, et leurs mélanges tels que les hydrolysats d'amidon, et
- d'autre part, les polyols ou sucres-alcools tels que les mono-, di-, oligo- et polysaccharides hydrogénés et leurs mélanges, dont notamment les hydrolysats d'amidon hydrogénés ou HAH.

Les hydrolysats d'amidon sont obtenus de manière en elle-même connue par hydrolyse enzymatique et/ou acide de lait d'amidon. Leur traitement par hydrogénation catalytique sous haute pression et haute température à l'aide de nickel de Raney permet d'obtenir les produits correspondants hydrogénés.

Dans un chewing-gum traditionnel, l'hydrate de carbone pulvérulent et le sirop d'hydrate de carbone sont constitués en général respectivement par le saccharose et un sirop dit "de glucose" ou hydrolysat d'amidon, tandis que dans un chewing-gum "sans sucre" à base de polyols, les hydrates de carbone pulvérulents et les sirops d'hydrates de carbone sont constitués en général respectivement par du maltitol, du xylitol, du mannitol ou du sorbitol poudre pour les premiers et par un sirop de polyols pour les seconds.

On connaît ainsi des chewing-gums "sans sucre" qui contiennent comme phase liquide des solutions aqueuses de sorbitol. Ces types de chewing-gums ont particulièrement tendance à perdre de l'eau et à sécher. Ils deviennent alors durs, cassants et granuleux et sont de ce fait pratiquement impropres à la consommation. Ce phénomène de perte en eau s'explique par la cristallisation du sorbitol initialement présent en solution, ce qui a pour conséquence une augmentation de la quantité d'eau libre, donc de la valeur d'Humidité Relative à l'Equilibre (HRE) desdits chewing-gums.

Il a donc été proposé (voir notamment les demandes de brevet européen N° 0.082.670 et 0.325.090) d'utiliser la glycérine comme composé plastifiant et liant dans les chewing-gums "sans sucre".

Les sirops ainsi obtenus sont connus comme étant particulièrement hygroscopiques et ont ainsi tendance à absorber de l'eau présente dans l'atmosphère dans laquelle ils sont stockés. Il en résulte qu'au bout d'un certain temps, ils deviennent collants et perdent leurs caractéristiques de structure et de texture qui les rendaient attractifs pour le consommateur. Ce phénomène peut être partiellement supprimé en conditionnant les chewing-gums dans des emballages étanches mais coûteux. Cette propension à la reprise en eau de ces chewing-gums "sans sucre" est liée à une valeur d'Humidité Relative à l'Equilibre (HRE) relativement faible.

Pour remédier à cet inconvénient dans les chewing-gums "sans sucre", l'emploi des sirops d'hydrolysats d'amidon hydrogénés s'est progressivement imposé au détriment de celui des sirops de sorbitol ou de glycérine. Les HAH ont en effet de meilleures propriétés plastifiantes liantes et anticristallisantes. Ils ont également pour avantage de limiter fortement les variations de l'HRE au sein des chewing-gums.

Mais il s'est avéré que ces sirops à base d'HAH ne sont pas dépourvus d'inconvénients. En effet, leur teneur en eau n'est pas négligeable puisqu'elle représente le plus souvent environ 20% en poids. Ils enrichissent donc en eau les chewing-gums dans lesquels ils sont employés. Le milieu humide ainsi créé est tout à fait contre-indiqué à l'utilisation d'édulcorants intenses de synthèse tels que l'aspartame qui est un dipeptide constitué d'un ester méthylique de L-aspartyl-L-phénylalanine.

On sait en effet que la stabilité de l'aspartame dans des produits alimentaires est liée à la quantité d'eau présente dans le milieu ainsi qu'à la valeur d'HRE, au temps de contact, à la température et au pH. Et dans des milieux aqueux à HRE élevée, l'aspartame se décompose spontanément en dicétopipérazine, ce qui entraîne inévitablement une perte en effet sucrant. De plus, ce produit de dégradation est connu pour sa saveur amère désagréable.

Une autre conséquence résultant de l'emploi des sirops d'HAH riches en eau est l'obtention d'un chewing-gum à texture très souple et collante, entraînant des problèmes au moment de la fabrication car un tel chewing-gum est peu commode à manipuler et à mettre en forme du fait de sa tendance à adhérer à tous les équipements

EP 0 431 995 B1

de fabrication. En outre, et pour les mêmes raisons, il n'est généralement pas apprécié par le consommateur.

Enfin, l'eau en excès dans les chewing-gums peut favoriser la solubilisation de certains arômes qui sont alors beaucoup plus sensibles à l'oxydation et, par voie de conséquence, s'altérent plus facilement.

Pour remédier à ces inconvénients, il s'agissait donc de diminuer la teneur en eau des chewing-gums sans sucre et plus précisément de la fraction liquide plastifiante et liante de ceux-ci.

Or, les sirops d'hydrolysats d'amidon hydrogénés qui constituent préférentiellement ladite fraction liquide, plastifiante et liante, ne peuvent pas être concentrés sans difficultés au-dessus d'une teneur en matière sèche de l'ordre de 88%. En effet, lorsque l'on évapore l'eau contenue dans de tels sirops, ils deviennent extrêmement visqueux. Dans ces conditions, les évaporateurs traditionnels ne conviennent plus. Il est nécessaire d'avoir recours à des équipements plus sophistiqués, donc très coûteux.

En outre, même si l'on parvient à la teneur réduite en eau souhaitée, la viscosité élevée subséquente de ces sirops d'hydrolysats implique qu'ils ne sont manipulables qu'à haute température. Or, on imagine aisément les problèmes que peut engendrer sur le plan industriel, le travail d'une masse chaude devant être incorporée dans une formulation de chewing-gum.

Par ailleurs, ces sirops concentrés doivent être maintenus en permanence au-dessus de leur température de solidification, faute de quoi ils se vitrifieraient en un bloc dur et résistant qu'il serait malaisé de refondre en vue d'un recyclage; pour éviter une dégradation par la chaleur, ces sirops maintenus fluides doivent impérativement être utilisés rapidement.

Enfin, la mise en contact de ces sirops avec des produits sensibles à la chaleur, lors de la préparation de chewing-gum, peut entraîner soit la dégradation de ceux-ci comme c'est le cas pour l'aspartame, soit leur volatilisation lorsqu'il s'agit d'arômes.

Il est clair que de telles contraintes ne répondent pas aux exigences industrielles de rentabilité économique et de qualité du produit fini.

Il a donc été proposé (voir par exemple le brevet US N° 4.671.967 et les demandes européennes N° 0.196.640 et N° 0.323.442) d'avoir recours, pour la préparation de produits alimentaires tels que les chewing-gums (voir les brevets US N° 4.671.961, 4.728.515, 4.753.806), à des compositions plastifiantes et liantes perfectionnées à base de sirop d'hydrolysats d'amidon et de glycérine ou de propylène-glycol.

En effet, la glycérine et le propylène-glycol abaissent la viscosité des sirops d'hydrolysat d'amidon et facilitent l'évaporation de l'eau que ces derniers contiennent, même lorsqu'on emploie des évaporateurs conventionnels. Le comportement rhéologique de ces mélanges sirops d'hydrates de carbone/glycérine est relativement satisfaisant et les compositions plastifiantes concentrées ainsi obtenues sont manipulables même à température ambiante.

Elles présentent néanmoins l'inconvénient d'avoir une HRE relativement basse et favorisent donc le phénomène de reprise en eau dans des chewing-gums auxquels ils sont incorporés. Cette faible valeur d'HRE est en partie liée à l'élimination d'eau. La glycérine, ajoutée à ces sirops, non seulement ne compense pas cette perte en eau mais, au contraire, ne fait qu'entraîner la valeur d'HRE à la baisse.

En outre, le pouvoir sucrant de ces compositions est très faible, inconvénient particulièrement sensible dans le cadre de leur application aux produits alimentaires "sans sucre" et notamment aux chewing-gums. Le déficit en effet sucrant doit alors être compensé par l'ajout d'édulcorants intenses, souvent onéreux et parfois instables à la conservation.

De plus, la glycérine présente une saveur astringente et désagréable qui, au-delà de 1% en poids, nuit aux qualités organoleptiques du produit final. Elle développe, par ailleurs, lors de sa consommation, un effet de dégagement de chaleur communément désigné dans le métier par l'expression de langue anglaise "Heating effect", et qui est tout à fait déplaisant pour le consommateur.

On connaît déjà des compositions édulcorantes susceptibles de comporter un hydrolysat d'amidon hydrogéné et du xylitol; toutefois, ces compositions ont une teneur en eau supérieure à 11% en poids. De plus, ces compositions n'ont jamais été utilisées pour conférer aux produits alimentaires auxquels elles sont destinées une stabilité à la conservation telle que décrite ci-après.

L'invention a pour but, surtout, de remédier aux inconvénients de l'art antérieur et de fournir une composition édulcorante concentrée répondant mieux que celles qui existent déjà aux diverses exigences de la pratique, c'est-à-dire

- possédant des propriétés plastifiantes et liantes,
- utilisable dans les produits alimentaires, notamment dans les chewing-gums et, en particulier, dans les chewing-gums "sans sucre",
- n'apportant qu'une quantité mineure d'eau au produit alimentaire auquel elle est destinée à être ajoutée,
- présentant des propriétés rhéologiques telles qu'elle soit commode à manipuler même à température ambiante,
- étant de préparation aisée,

3

- stable en elle-même et apte à conférer aux produits alimentaires auxquels elle est destinée à être incorporée une stabilité suffisante à la conservation, notamment en rapport avec la reprise d'eau qui conduit à une dégradation de la qualité de ces produits et notamment des chewing-gums sans sucre et en rapport avec le phénomène de cristallisation qui conduit à une augmentation de la dureté desdits produits et à l'apparition de cristaux qui se traduit par un effet rapeux désagréable sur la langue,
- présentant un pouvoir sucrant important permettant de diminuer l'apport en édulcorant intense de synthèse.

Et la Société Demanderesse a eu le mérite de trouver, à l'issue de recherches approfondies, que ce but pouvait être atteint dès lors que la composition édulcorante concentrée comprend un sirop d'hydrolysat d'amidon hydrogéné et au moins un itol en $C_4$ ou $C_5$.

Par conséquent, la composition édulcorante concentrée pour produits alimentaires conforme à l'invention comprend:

- un sirop d'hydrolysat d'amidon hydrogéné contenant plus de 30%, de préférence plus de 50% et plus préférentiellement encore plus de 70% en poids de l'hydrolysat sec, de molécules ayant un degré de polymérisation égal à 2,
- de 1 à 50%, de préférence de 5 à 45% et plus préférentiellement encore de 10 à 40% en poids par rapport à la matière sèche de la composition d'au moins un itol en $C_4$ ou $C_5$, cet itol étant de préférence le xylitol, et
- de l'eau, à raison de 6 à 11% en poids de la composition.

Les produits alimentaires conformes à l'invention sont caractérisés par le fait qu'ils comprennent, par rapport à la matière sèche totale, de 5 à 25% en poids de la composition édulcorante concentrée conforme à l'invention.

Parmi ces produits alimentaires, on citera non seulement les chewing-gums mais également les fondants gras ou non, les articles gélifiés, les fruits confits, les solutions de dragéification, ou autres.

La composition édulcorante concentrée conforme à l'invention est particulièrement stable au stockage et possède des propriétés anticristallisantes intéressantes à l'égard des hydrates de carbone employés comme agents sucrants et/ou de charge dans des compositions alimentaires.

Ces propriétés permettent de stabiliser la dureté du produit alimentaire dans lequel la composition est mise en oeuvre, ce qui est particulièrement avantageux lorsque le produit alimentaire est un chewing-gum.

Dans le cadre de son application aux chewing-gums et malgré la concentration réduite en eau, les propriétés plastifiantes et liantes de la composition selon l'invention sont intéressantes en raison du fait que de nombreux ingrédients doivent être mélangés de manière homogène lors de leur préparation.

Par ailleurs, ladite composition permet la substitution d'une partie des produits pulvérulents coûteux employés comme agent de charge tout en diminuant la quantité d'eau dont le transport n'est pas économique.

En tout état de cause, elle remplace avantageusement les compositions connues à base de sirops d'hydrates de carbone et de glycérine.

On peut rappeler également ses effets stabilisants et anticristallisants qui confèrent aux chewing-gums une qualité constante au vieillissement même dans des conditions de stockage sévères notamment sur le plan de l'humidité relative.

L'humidité relative à l'équilibre de la composition conforme à l'invention est suffisamment élevée pour atténuer les phénomènes de reprise en eau dans les produits alimentaires auxquels elle est susceptible d'être ajoutée.

Avantageusement, ladite composition présente une teneur en eau de 4 à 16% en poids et, de préférence, comprise entre 6 et 11% en poids.

Selon un mode de réalisation avantageux de la composition conforme à l'invention, l'itol est choisi dans le groupe comprenant l'érythritol, le thréitol (itols en $C_4$), l'arabitol, le ribitol et le xylitol (itols en $C_5$), le xylitol étant préféré.

Dans le cas du xylitol, l'absence de phénomènes de cristallisation, même après de longues durées de stockage, est particulièrement inattendue étant donné que le xylitol a une forte tendance à cristalliser et est solide à température ambiante, contrairement à la glycérine employée dans les compositions selon l'art antérieur.

Par ailleurs, le xylitol qui présente d'excellentes propriétés organoleptiques et en particulier un fort pouvoir sucrant, est non seulement acariogène mais serait de surcroît actif dans l'inhibition de la carie dentaire.

La composition suivant l'invention comprend de préférence de 30 à 35% en poids de xylitol par rapport à sa matière sèche totale.

Selon un mode de réalisation avantageux de la composition conforme à l'invention, le sirop d'hydrolysat d'amidon hydrogéné comprend, par rapport à sa matière sèche, plus de 30%, de préférence plus de 50% et, plus préférentiellement encore, plus de 70% en poids de molécules ayant un degré de polymérisation ou DP égal à 2.

La composition conforme à ce mode de réalisation est non seulement stable mais présente de plus des propriétés texturantes et plastifiantes améliorées. Son humidité relative à l'équilibre est supérieure à celles généralement rencontrées dans les compositions édulcorantes concentrées connues et, lorsqu'elle est mise en oeuvre dans des produits alimentaires tels que les chewing-gums, elle minimise le phénomène de reprise en eau au stockage en permettant à l'HRE du produit considéré de se rapprocher des valeurs moyennes d'humidité relative des ambiances de stockage les plus fréquemment rencontrées. Son comportement avantageux en ce qui concerne les échanges d'eau libre, associé à sa viscosité relativement importante, lui confèrent un pouvoir anticristallisant remarquable.

Sa teneur élevée en molécules de DP 2, c'est-à-dire en maltitol, et la présence de xylitol, confèrent à la composition un pouvoir sucrant élevé qui lui donne une saveur sucrée proche de celle du saccharose.

Elle constitue donc un ingrédient édulcorant tout à fait efficace qui est susceptible de permettre la diminution, voire la suppression de l'apport en édulcorant intense dans des produits par exemple du type "sans sucre".

Parmi les sirops d'HAH utilisables dans le cadre de ce mode de réalisation avantageux, on peut citer
- ceux comprenant par rapport à leur matière sèche:
  . de 2 à 10%, en poids de molécules de DP égal à 1,
  . de 70 à 90%, en poids de molécules de DP égal à 2,
  . de 7 à 24% en poids de molécules de DP supérieur à 2,
- ceux comprenant par rapport à leur matière sèche:
  . de 1 à 17% en poids de molécules de DP égal à 1,
  . de 35 à 75% en poids de molécules de DP égal à 2,
  . de 10 à 30% en poids de molécules de DP allant de 3 à 6,
  . de 5 à 25% en poids de molécules de DP allant de 7 à 20,

Une telle composition présente des avantages semblables à ceux évoqués précédemment pour le mode préféré de mise en oeuvre de l'invention.

La composition conforme à l'invention est hypocariogène. Cela lui confère un avantage non négligeable notamment en vue de son application dans des produits alimentaires du type "sans sucres.

Selon un autre mode de réalisation avantageux, la composition conforme à l'invention comporte une substance telle que la glycérine ou le propylèneglycol, à une concentration inférieure à 4% en poids par rapport à la matière sèche.

Dans son application aux chewing-gums, la composition conforme à ce mode de réalisation permet d'améliorer la perception aromatique.

Pour préparer la composition conforme à l'invention, on peut:
- mélanger le sirop d'hydrates de carbone avec l'itol à l'état de poudre ou en solution et éventuellement la glycérine,
- puis évaporer l'eau contenue dans le mélange ainsi préparé jusqu'à atteindre une teneur en eau comprise entre 4 et 16%,

le mélange résultant étant manipulable même à température ambiante et présentant une viscosité compatible avec la mise en oeuvre de l'évaporation de manière aisée au moyen d'équipements conventionnels.

Les sirops d'HAH auxquels il est fait recours dans le cadre de l'invention peuvent être préparés comme décrit, par exemple, dans le brevet français N° 2.444.080 de la Société Demanderesse.

L'étape d'évaporation peut être effectuée à l'aide de dispositifs conventionnels parmi lesquels on peut citer ceux du type commercialisés sous la marque "PARAVAP" par la Société APV Equipment Incorporated of Tonowanda N.Y.

L'invention sera bien comprise à l'aide des exemples non limitatifs suivants dans lesquels sont présentés des modes de réalisation avantageux de la composition ainsi que son application au titre d'ingrédient liquide dans les chewing-gums et dans d'autres produits alimentaires.

On identifie ci-après les sirops utilisés dans ces exemples:

a) Un sirop A de glucose hydrogéné, commercialisé sous la marque déposée LYCASIN[R] 80/55 par la Société ROQUETTE FRERES, limpide, incolore, de saveur sucrée et non cariogène, dont la teneur en matière sèche est de 75%±1 en poids et dont le spectre glucidique est:
- D-sorbitol          7,7%
- disaccharides hydrogénés          53,0%
- tri- à hexasaccharides hydrogénés          24,9%
- saccharides hydrogénés DP 7 à DP 20          13,5%
- saccharides hydrogénés DP > 20          3% maximum.

b) Un sirop B de glucose hydrogéné, commercialisé sous la marque déposée MALTISORB[R] 75/75 par la Société ROQUETTE FRERES, limpide, incolore, de saveur sucrée proche de celle du saccharose et non cariogène, dont la teneur en matière sèche est de 75,7%±1 en poids et dont le spectre glucidique est (en % sur sec):

- D-sorbitol          3,1%
- disaccharides hydrogénés (maltitol)          77,4%
- saccharides hydrogénés DP > 2          18,5%.

c) Un sirop C de glucose hydrogéné, dénommé MALTISORB[R] 70/86 (marque déposée par la Société ROQUETTE FRERES), limpide, incolore, de saveur sucrée proche de celle du saccharose et non cariogène, dont la teneur en matière sèche est d'environ 70%±1 en poids et dont le spectre glucidique est (en % sur sec):

- D-sorbitol          2,8%
- disaccharides hydrogénés (maltitol)          86,1%
- saccharides hydrogénés DP > 2          11,1%.

La glycérine à 98% de pureté employée dans les exemples est du type de celle commercialisée par la Société espagnole MONPLET E ESTEBAN SA MADRID.

L'itol mis en oeuvre dans les exemples est du xylitol poudre cristallisé ayant une teneur en eau résiduelle inférieure à 1%.

Pour préparer les compositions conformes à l'invention utilisées dans les exemples, on mélange directement le xylitol pulvérulent au sirop et on malaxe pendant un temps suffisant pour permettre la dissolution des cristaux dans le sirop, en apportant éventuellement de l'eau de dilution; le mélange est ensuite concentré par évaporation de l'eau présente jusqu'à un pourcentage en matière sèche déterminé compris entre 89 et 94% en poids.

## EXEMPLE COMPARATIF 1

**Mesure de la valeur d'HRE et de la viscosité de compositions à base de sirop A et de xylitol conformes à l'invention et de compositions à base de sirop A et de glycérine selon l'art antérieur.**

On a indiqué dans le tableau I la nature des constituants de sept compositions (respectivement composition 1 à composition 7), les proportions en % en poids sur matières sèches de ces constituants ainsi que la teneur en matières sèches des compositions, leur valeur d'HRE et leur viscosité Brookfield exprimée en cps.

### TABLEAU I

| Compo-sition | Constituants | Proportions (%) | Matières sèches (%) | HRE (%) | Viscosité Brookfield Pa.s | | |
|---|---|---|---|---|---|---|---|
| | | | | | à 40°C | à 50°C | à 60°C |
| 1 | Sirop A xylitol | 65 35 | 92,7 | 38 | 140 | 40 | 15 |
| 2 | Sirop A xylitol | 65 35 | 90,6 | 44 | 45,5 | 15 | 5 |
| 3 | Sirop A xylitol | 70 30 | 92,6 | 39 | 200 | 70 | 33,5 |
| 4 | Sirop A xylitol | 70 30 | 90,5 | 46 | 48,5 | 16 | 6,5 |
| 5 | Sirop A glycérine | 75 25 | 93,7 | 33 | 72 | 17 | 6 |
| 6 | Sirop A glycérine | 75 25 | 92,5 | 37 | 26 | 9 | 3,8 |
| 7 | Sirop A glycérine | 75 25 | 90,5 | 43 | 9,5 | 3,5 | 1,7 |

On observe que les compositions 1 à 4 conformes à l'invention sont plus visqueuses à température donnée et à même matière sèche que les compositions connues 5 à 7. Les propriétés plastifiantes et liantes des compositions conformes à l'invention sont donc améliorées et ce, sans que cela ne pose de problèmes particuliers lors de la manipulation de ces compositions.

En ce qui concerne les valeurs d'HRE, on constate que celles des compositions 1 à 4 sont supérieures à celles des compositions 6 et 7 pour des teneurs en matières sèches semblables.

Il en découle que les compositions conformes à l'invention sont moins hygroscopiques que celles selon l'art antérieur, ce qui est tout à fait avantageux dans le cadre d'une application à des chewing-gums et notamment à des chewing-gums dragéifiés. En effet, des ingrédients peu hygroscopiques permettent de limiter la reprise en eau au stockage, les chewing-gums conservant ainsi leur dureté initiale et leur croustillance dans le cas de produits dragéifiés.

**EXEMPLE COMPARATIF 2**

**Mesures de stabilité au stockage sur une composition conforme à l'invention à base de sirop B et de xylitol et sur une composition à base de sirop B et de glycérine.**

On prépare comme indiqué plus haut les compositions 8 et 9 dont les caractéristiques sont réunies dans le tableau II.

## TABLEAU II

| Compositions | Constituants | Proportions des constituants sur sec (% en poids) | Matières sèches % en poids |
|---|---|---|---|
| 8 | sirop B xylitol | 75 25 | 93,0 |
| 9 | sirop B glycérine | 75 25 | 93,0 |

En observant l'évolution des compositions 8 et 9 au stockage à 20°C dans une ambiance à 66% d'humidité relative, on constate que la composition 9 cristallise progressivement et devient opaque tandis que la composition 8 ne connaît pas de modifications de structure ni d'aspect.

Après 6 mois de stockage, la composition 9 a totalement pris en masse et forme un bloc cristallin dur et compact. Contrairement à cela, la composition 8 est restée limpide et plastique et ne présente aucun germe de cristallisation.

Il faut souligner ici le caractère surprenant de ce résultat, le xylitol et le maltitol étant connus pour cristalliser facilement.

**EXEMPLE COMPARATIF 3**

**Mesures de la valeur d'HRE, de la viscosité et du pouvoir sucrant sur des compositions à base de sirops B et C et de xylitol et sur des compositions selon l'art antérieur.**

La méthode de préparation est semblable à celle utilisée précédemment.

Dans le tableau III, on a indiqué la nature des constituants et leurs proportions en % en poids sur matières sèches dans les compositions examinées (nouvelles compositions 10 à 14 et compositions selon l'art antérieur 6 et 7) ainsi que la teneur en matières sèches des compositions examinées, leur HRE et leur viscosité Brookfield exprimée en cps.

## TABLEAU III

| Compo-sition | Constituants | Proportions (%) | Matières sèches (%) | HRE (%) | Viscosité Brookfield Pa.s | | |
|---|---|---|---|---|---|---|---|
| | | | | | à 40°C | à 50°C | à 60°C |
| 10 | Sirop B xylitol | 65 35 | 92,3 | 36 | 72 | 28 | 7,8 |
| 11 | Sirop B xylitol | 65 35 | 90,1 | 44 | 17 | 6,5 | 2,6 |
| 12 | Sirop B xylitol | 70 30 | 92,1 | 37 | 82 | 32 500 | 10 |
| 13 | Sirop B xylitol | 70 30 | 90,0 | 44 | 21,5 | 7 | 2,8 |
| 14 | Sirop C xylitol | 65 35 | 92,5 | 37 | 16 | 5,8 | 2 |
| 6 | Sirop A glycérine | 75 25 | 92,5 | 37 | 26 | 9 | 3,8 |
| 7 | Sirop A glycérine | 75 25 | 90,5 | 43 | 9,5 | 3,5 | 1,7 |

Toutes les compositions examinées sont stables au moins 6 mois à 20°C dans une ambiance à 66% d'humidité relative.

Par ailleurs, elles présentent des valeurs d'HRE très voisines pour une matière sèche donnée.

On observe que les viscosités des compositions 10 à 14 sont légèrement supérieures à celles compositions connues 6 et 7 à une température donnée et à même matière sèche.

Il s'ensuit que les propriétés plastifiantes et liantes des compositions selon l'invention sont améliorées, ces compositions étant par ailleurs faciles à manipuler.

On a également procédé à un test organoleptique et à la mesure du pouvoir sucrant des compositions 10, 12, 14 et 6.

1. Test organoleptique

Les compositions 10, 12, 14 et 6 sont comparées du point de vue de leur goût, après dilution jusqu'à une matière sèche de 70% en poids, par un jury de dégustation composé de 10 personnes.

Chaque dégustateur goûte les quatre compositions en test aveugle et sélectionne celle qu'il préfère ainsi que celle qu'il considère comme la plus mauvaise en donnant les raisons de son choix.

Les résultats sont réunis dans le tableau IV dans lequel on indique par $N_1$ le nombre de fois qu'une composition donnée est sélectionnée comme étant la meilleure et par $N_2$ le nombre de fois qu'une composition donnée et sélectionnée comme étant la plus mauvaise.

## TABLEAU IV

| Composition | $N_1$ | $N_2$ |
|---|---|---|
| 10 | 2 | 1 |
| 12 | 3 | 1 |
| 14 | 5 | 1 |
| 6 | 1 | 7 |

Comme on peut le constater, la composition 6 contenant la glycérine est la moins appréciée. Les raisons de ce rejet données par les dégustateurs tiennent au caractère peu sucré de la composition 6, à un effet de réchauffement en bouche ("Heating effect") désagréable, et enfin à une certaine amertume ou piquant en bouche.

Les dégustateurs ont préféré les compositions 10, 12 et surtout 14 pour leur fraîcheur et leur forte saveur sucrée sans arrière-goût.

2. Pouvoir sucrant

Les pouvoirs sucrants des compositions identifiées ci-dessus sont déterminés par référence à celui du saccharose.

A cette fin, on prépare un sirop de référence à 10% en poids de matière sèche de saccharose. Le pH de ce sirop est ajusté à 5,5 à l'aide d'une solution d'acide citrique à 50% de matière sèche.

Les compositions dont le pouvoir sucrant doit être déterminé et dont les pH sont également ajustés à 5,5 sont diluées jusqu'à obtenir une saveur sucrée équivalente à celle du sirop de saccharose et déterminée par dégustation.

Le pouvoir sucrant du saccharose étant fixé à 1, le rapport des quantités de substances sucrantes utilisées, à savoir teneur en matières sèches du susdit sirop de saccharose / teneur en matières sèches des compositions testées lorsque la saveur sucrée est équivalente à celle du sirop de saccharose, détermine le pouvoir sucrant de la composition testée.

Les résultats sont réunis dans le tableau V.

## TABLEAU V

| Compositions | 10 | 12 | 14 | 6 |
|---|---|---|---|---|
| Pouvoir sucrant | 0,87 | 0,86 | 0,90 | 0,64 |

Ces valeurs mettent en évidence la supériorité, du point de vue de leur pouvoir sucrant, des compositions 10, 12, 14 conformes à l'invention par rapport à la composition 6 de l'art antérieur.

## EXEMPLE 4

**Compositions à base de sirop C, de xylitol et de glycérine**

On prépare des compositions désignées 15 à 17 et comprenant du sirop C, du xylitol et de la glycérine dans des proportions respectives de 80%, 17% et 3% en poids par rapport à la matière sèche de la composition.

Dans le tableau VI suivant, on a réuni les valeurs de la teneur en matières sèches des trois compositions, de l'humidité relative à l'équilibre et de la viscosité Brookfield exprimée en cps à trois températures, à savoir 40, 50 et 60°C.

## TABLEAU VI

| Composition | Teneur en matières sèches (%) | HRE (%) | Viscosité Brookfield Pa.s | | |
|---|---|---|---|---|---|
| | | | 40°C | 50°C | 60°C |
| 15 | 93,1 | 44 | 74,8 | 30 | 15 |
| 16 | 92,5 | 47 | 56 | 18 | 10,5 |
| 17 | 90,5 | 49 | 30 | 8,5 | 4 |

Les compositions 15 à 17 présentent l'avantage d'avoir des valeurs d'HRE élevées et des propriétés plastifiantes et liantes satisfaisantes; elles ont un pouvoir sucrant (déterminé par la méthode décrite à l'exemple 3) de 0,86.

## EXEMPLE 5

**Chewing-gum sans sucre.**

On a préparé 430 g de chewing-gum dont les constituants sont les suivants:
- gomme base 34/42 commercialisée par la Société DREYFUS         180 g
- mannitol standard commercialisé par la Société ROQUETTE FRERES         42 g
- sorbitol poudre commercialisé sous la marque NEOSORB$^R$ 60 W par la Société ROQUETTE FRERES         113 g
- composition conforme à l'invention         90 g
- arôme "spearmint" (menthe)         5 g.

Le procédé de fabrication du chewing-gum comporte les étapes suivantes:
- ramollissement de la gomme base à 80°C,
- introduction de la gomme base dans un pétrin à double enveloppe équipé d'un bras malaxeur en forme générale de Z du type de celui commercialisé par la société KUSTNER FRERES, et de capacité utile de 600 g,
- introduction de 1/5 de la poudre NEOSORB$^R$ 60 W avec la moitié de la composition conforme à l'invention,
- mélange pendant 2 minutes,
- introduction du mannitol,
- mélange pendant 1 minute,
- introduction de 1/5 de la poudre de NEOSORB$^R$ 60 W avec l'autre moitié de la composition selon l'invention,
- mélange pendant 2 minutes,
- introduction du NEOSORB$^R$ 60 W restant,
- mélange pendant 2 minutes,
- introduction de l'arôme spearmint,
- mélange pendant 1 minute supplémentaire,
- mise en forme du chewing-gum par laminage de manière à obtenir des plaquettes de 7 mm d'épaisseur,
- saupoudrage avec du mannitol SF commercialisé par la société ROQUETTE FRERES.

Trois chewing-gums sont préparés dans les conditions indiquées ci-dessus en ayant recours respectivement à des compositions édulcorantes concentrées conformes à l'invention 20, 21 et 15 dont les caractéristiques, c'est-à-dire la nature des constituants, leurs proportions respectives (sur sec en % en poids), la teneur en matières sèches des compositions, leur valeur d'HRE et leur pouvoir sucrant au sens de l'exemple 3 sont réunis dans le tableau VII.

EP 0 431 995 B1

## TABLEAU VII

| Composition | Constituants | Proportions (%) | Matières sèches (%) | HRE (%) | Pouvoir sucrant |
|---|---|---|---|---|---|
| 20 | Sirop A glycérine | 75 25 | 93,1 | 36 | 0,64 |
| 21 | Sirop A xylitol | 65 35 | 93,2 | 35 | 0,84 |
| 15 | Sirop C xylitol glycérine | 80 17 3 | 93,1 | 44 | 0,86 |

Pour des raisons de clarté, chaque chewing-gum sera désigné par le numéro de la composition qu'il comprend.

Dans un premier temps, il est procédé à l'évaluation de la dureté (en Newtons N) des chewing-gums à l'aide d'un dispositif INSTRON type 4502.

Les mesures de duretés ont été effectuées sur les plaquettes de chewing-gum de 7 mm d'épaisseur, d'une part au cours de leur refroidissement à quatre températures successives (50, 40, 30 et 20°C) et, d'autre part à trois moments lors de leur stockage à 20°C dans une ambiance à 66% d'humidité relative (c'est-à-dire après 1 jour, 8 jours et 15 jours de stockage).

Les résultats sont réunis dans le tableau VIII.

## TABLEAU VIII

| Chewing-gum | Dureté au cours du refroidissement (N) | | | | Dureté pendant stockage (N) | | |
|---|---|---|---|---|---|---|---|
| | 50°C | 40°C | 30°C | 20°C | 1 jour | 8 jours | 15 jours |
| 20 | 1,85 | 4,20 | 11,70 | 25,70 | 33,95 | 44,85 | 50,30 |
| 21 | 1,30 | 3,35 | 10,05 | 28,60 | 42,30 | 50,60 | 49,30 |
| 15 | 1,50 | 4,10 | 10,80 | 29,90 | 39,80 | 50,30 | 50,20 |

Le chewing-gum 21 conforme à l'invention est plus souple à chaud que le chewing-gum 20 conforme à l'art antérieur. En revanche, il se raffermit plus vite pour ensuite se stabiliser à une valeur voisine, soit environ 50 N.

Le chewing-gum 15 conforme à l'invention est sensiblement aussi dur à chaud que le chewing-gum 20. En outre, il se stabilise plus vite que ce dernier à une dureté d'environ 50 N.

Dans un second temps, il a été procédé à une évaluation de la stabilité des chewing-gums à l'égard de l'humidité.

Pour cela, on a mesuré les teneurs en eau initiales des chewing-gums ainsi que celles de ces mêmes chewing-gums après stockage de 1 mois à 66% d'humidité et à 20°C.

Les résultats sont réunis dans le tableau IX.

11

## TABLEAU IX

| Chewing-gum | Teneur en eau initiale | Teneur en eau après stockage |
|:---:|:---:|:---:|
| 20 | 1,45 | 2,50 |
| 21 | 1,44 | 2,20 |
| 15 | 1,44 | 1,55 |

On remarque que le chewing-gum 15 est le plus stable à l'humidité. Il n'a en effet repris que 7,6% en poids d'eau, à comparer aux 52,7% et 72,4% en poids d'eau repris respectivement pour les chewing-gums 21 et 20.

Les chewing-gums sont ensuite soumis à un test de dégustation après un mois de stockage à 66% d'humidité relative et à 20°C par un panel de sept personnes.

Le chewing-gum 15 est celui qui a reçu la préférence des dégustateurs en raison de sa saveur sucrée et de sa fraîcheur.

## EXEMPLE 6

**Fondant sans sucre comportant une composition conforme à l'invention.**

La composition 15 mentionnée ci-avant est diluée avec de l'eau à 89% de matière sèche. Elle est ensuite battue à l'aide d'un dispositif du type de celui commercialisé par la société HOBART. La composition transparente de départ s'opacifie peu à peu, pour prendre finalement une couleur blanche.

Après quelques minutes de battage, le fondant est aromatisé au moyen d'un arôme "peppermint" dosé à 0,25% en poids par rapport à la composition de départ.

Le fondant obtenu présente une stabilité excellente. En effet, on n'observe pas d'évolution de la cristallisation au stockage. De plus, la forte saveur sucrée et l'effet rafraîchissant agréable constatés en font un fondant de qualité.

## EXEMPLE 7

**Article gélifié sans sucre comportant une composition conforme à l'invention.**

Une quantité de 460 g de la composition 4 est portée à une température de 70°C.

On ajoute ensuite 450 g d'une solution de gomme arabique à 50% de matière sèche et on mélange. Le sirop obtenu est coulé dans de l'amidon de coffrage après addition d'arôme et d'acide en quantités suffisantes.

Après étuvage à 45°C pendant 48 heures, on obtient des gommes d'une matière sèche voisine de 90%. Ces gommes sont jugées comme présentant une saveur excellente. Le pouvoir sucrant de la composition employée est suffisant sans apport d'édulcorant intense.

## Revendications

1.  Utilisation d'une composition édulcorante concentrée comprenant un sirop d'hydrolysat d'amidon hydrogéné et de 1 à 50%, de préférence de 5 à 45%, et plus préférentiellement encore de 10 à 40% en poids par rapport à sa matière sèche totale, d'au moins un itol en $C_4$ ou $C_5$, pour conférer aux produits alimentaires auxquels elle est destinée à être incorporée une stabilité suffisante à la conservation, notamment en rapport avec la reprise d'eau qui conduit à une dégradation de la qualité de ces produits et en rapport avec le phénomène de cristallisation.

2.  Utilisation selon la revendication 1, d'une composition édulcorante concentrée comprenant un sirop d'hydrolysat d'amidon hydrogéné et de 1 à 50%, de préférence de 5 à 45%, et plus préférentiellement encore de 10 à 40% en poids par rapport à sa matière sèche totale, d'au moins un itol en $C_4$ ou $C_5$ et ayant une teneur en eau de 4 à 16% en poids.

3.  Utilisation selon la revendication 1, d'une composition édulcorante concentrée comprenant un sirop d'hydrolysat d'amidon hydrogéné et de 1 à 50%, de préférence de 5 à 45%, et plus préférentiellement encore de 10 à 40% en poids par rapport à sa matière sèche totale, d'au moins un itol en $C_4$ ou $C_5$ et ayant une teneur en eau de 6 à 11% en poids.

4.  Utilisation selon la revendication 1, d'une composition édulcorante concentrée comprenant un sirop d'hydrolysat d'amidon hydrogéné et de 1 à 50%, de préférence de 5 à 45%, et plus préférentiellement encore de 10 à 40% en poids par rapport à sa matière sèche totale, d'au moins un itol en $C_4$ ou $C_5$ choisi dans le groupe comprenant l'érythritol, le thréitol, l'arabitol, le ribitol et le xylitol, le xylitol étant préféré.

5.  Utilisation selon la revendication 1, d'une composition édulcorante concentrée comprenant un sirop d'hydrolysat d'amidon hydrogéné et de 1 à 50%, de préférence de 5 à 45%, et plus préférentiellement encore de 10 à 40% en poids par rapport à sa matière sèche totale, d'au moins un itol en $C_4$ ou $C_5$ choisi dans le groupe comprenant l'érythritol, le thréitol, l'arabitol, le ribitol et le xylitol, et ayant une teneur en eau de 4 à 16%, de préférence de 6 à 11% en poids.

6.  Utilisation selon la revendication 1, d'une composition édulcorante concentrée comprenant un sirop d'hydrolysat d'amidon hydrogéné et de 30 à 35% en poids de xylitol par rapport à la matière sèche totale, sa teneur en eau étant de 4 à 16%, de préférence de 6 à 11% en poids.

7.  Utilisation selon la revendication 1, d'une composition édulcorante concentrée comprenant un sirop d'hydrolysat d'amidon hydrogéné ayant plus de 30%, de préférence plus de 50% et, plus préférentiellement encore, plus de 70% en poids de molécules ayant un degré de polymérisation égal à 2 ainsi que de 1 à 50%, de préférence de 5 à 45%, et plus préférentiellement encore de 10 à 40% en poids par rapport à sa matière sèche totale, d'au moins un itol en $C_4$ ou $C_5$ choisi dans le groupe comprenant l'érythritol, le thréitol, l'arabitol, le ribitol et le xylitol, de préférence de 30 à 35% en poids de xylitol par rapport à la matière sèche totale, sa teneur en eau étant de 4 à 16%, de préférence de 6 à 11% en poids.

8.  Utilisation selon la revendication 1, d'une composition édulcorante concentrée comprenant un sirop d'hydrolysat d'amidon hydrogéné ayant plus de 30%, de préférence plus de 50% et, plus préférentiellement encore, plus de 70% en poids de molécules ayant un degré de polymérisation égal à 2 ainsi que de 1 à 50%, de préférence de 5 à 45%, et plus préférentiellement encore de 10 à 40% en poids par rapport à sa matière sèche totale, d'au moins un itol en $C_4$ ou $C_5$ choisi dans le groupe comprenant l'érythritol, le thréitol, l'arabitol, le ribitol et le xylitol, de préférence de 30 à 35% en poids de xylitol par rapport à la matière sèche totale, sa teneur en eau étant de 4 à 16%, de préférence de 6 à 11% en poids, ladite composition comprenant en outre une substance telle que la glycérine ou le propylèneglycol à une concentration inférieure à 4% en poids par rapport à la matière sèche.

9.  Utilisation selon l'une des revendications 1 à 8, le produit alimentaire auquel est destinée à être incorporée la composition édulcorante concentrée étant choisi dans le groupe comprenant les chewing-gums, les fondants, les fourrages gras ou non, les articles gélifiés, les fruits confits ou les solutions de dragéification.

10. Composition édulcorante concentrée caractérisée par le fait qu'elle comprend:
    - un sirop d'hydrolysat d'amidon hydrogéné contenant plus de 30%, de préférence plus de 50% et plus préférentiellement encore plus de 70% en poids de l'hydrolysat sec, de molécules ayant un degré de polymérisation égal à 2,
    - de 1 à 50%, de préférence de 5 à 45% et plus préférentiellement encore de 10 à 40% en poids par rapport à la matière sèche de la composition d'au moins un itol en $C_4$ ou $C_5$, cet itol étant de préférence le xylitol, et
    - de l'eau, à raison de 6 à 11% en poids de la composition.

## Patentansprüche

1.  Verwendung einer konzentrierten Süßungsmittel-Zusammensetzung, welche einen Sirup aus einem hydrierten Stärkehydrolysat sowie 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol enthält, um den Nahrungsmitteln, welchen die Süßungsmittel-Zusammensetzung einverleibt werden soll, eine für die Konservierung ausreichende Beständigkeit zu verleihen, insbesondere im Hinblick auf die Wiederaufnahme von Wasser, welche zu einer Qualitätsverschlechterung dieser Produkte führt, und hinsichtlich des Phänomens der Kristallisation.

EP 0 431 995 B1

2. Verwendung einer konzentrierten Süßungsmittel-Zusammensetzung nach Anspruch 1, welche einen Sirup aus einem hydrierten Stärkehydrolysat sowie 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol enthält und welche einen Wassergehalt von 4 bis 16 Gew.-% aufweist.

3. Verwendung einer konzentrierten Süßungsmittel-Zusammensetzung nach Anspruch 1, welche einen Sirup aus einem hydrierten Stärkehydrolysat sowie 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol enthält und welche einen Wassergehalt von 6 bis 11 Gew.-% aufweist.

4. Verwendung einer konzentrierten Süßungsmittelzusammensetzung nach Anspruch 1, welche einen Sirup aus einem hydrierten Stärkehydrolysat sowie 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol enthält, welcher letztgenannte aus einer Erythrit, Threit, Arabit, Ribit und Xylit umfassenden Gruppe ausgewählt ist, wobei das Xylit bevorzugt wird.

5. Verwendung einer konzentrierten Süßungsmittelzusammensetzung nach Anspruch 1, welche einen Sirup aus einem hydrierten Stärkehydrolysat sowie 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol enthält, welcher letztgenannte aus einer Erythrit, Threit, Arabit, Ribit und Xylit umfassenden Gruppe ausgewählt ist, und welche einen Wassergehalt von 4 bis 16 Gew.-%, vorzugsweise von 6 bis 11 Gew.-% aufweist.

6. Verwendung einer konzentrierten Süßungsmittel-Zusammensetzung nach Anspruch 1, welche einen Sirup aus einem hydrierten Stärkehydrolysat sowie 30 bis 35 Gew.-% Xylit, bezogen auf die Gesamttrockensubstanz der Zusammensetzung, enthält, und welche einen Wassergehalt von 4 bis 16 Gew.-%, vorzugsweise von 6 bis 11 Gew.-% aufweist.

7. Verwendung einer konzentrierten Süßungsmittel-Zusammensetzung nach Anspruch 1, welche einen Sirup aus einem hydrierten Stärkehydrolysat enthält, welcher mehr als 30 Gew.-%, in höherem Maße bevorzugt mehr als 50 Gew.-% und in noch höher bevorzugtem Maße mehr als 70 Gew.-% an Molekülen mit einem Polymerisationsgrad von gleich zwei enthält, und welche 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkhol, welcher letztgenannte aus einer Erythrit, Threit, Arabit, Ribit und Xylit umfassenden Gruppe ausgewählt ist, vorzugsweise 30 bis 35 Gew.-% Xylit, bezogen auf die Gesamttrockensubstanz der Zusammensetzung, enthält, und welche einen Wassergehalt von 4 bis 16 Gew.-%, vorzugsweise von 6 bis 11 Gew.-% aufweist.

8. Verwendung einer konzentrierten Süßungsmittel-Zusammensetzung nach Anspruch 1, welche einen Sirup aus einem hydrierten Stärkehydrolysat enthält, welcher mehr als 30 Gew.-%, in höherem Maße bevorzugt mehr als 50 Gew.-% und in noch höher bevorzugtem Maße mehr als 70 Gew.-% an Molekülen mit einem Polymerisationsgrad von gleich zwei enthält, und welche 1 bis 50 Gew.-%, vorzugsweise 5 bis 45 Gew.-% und in noch höher bevorzugtem Maße 10 bis 40 Gew.-%, bezogen auf die Gesamttrockensubstanz der Zusammensetzung, an wenigstens einem $C_4$- oder $C_5$-Zuckeralkohol, welcher letztgenannte aus einer Erythrit, Threit, Arabit, Ribit und Xylit umfassenden Gruppe ausgewählt ist, vorzugsweise 30 bis 35 Gew.-% Xylit, bezogen auf die Gesamttrockensubstanz der Zusammensetzung, enthält, und welche einen Wassergehalt von 4 bis 16 Gew.-%, vorzugsweise von 6 bis 11 Gew.-% aufweist, wobei die genannte Zusammensetzung außerdem eine Substanz, wie z.B. Glycerin oder Propylenglykol, in einer Konzentration von unter 4 Gew.-%, bezogen auf die Trockensubstanz der Zusammensetzung, enthält.

9. Verwendung nach einem der Ansprüche 1 bis 8, wobei das Nahrungsmittel, welchem die konzentrierte Süßungsmittel-Zusammensetzung einverleibt werden soll, aus einer Gruppe ausgewählt ist, welche Kaugummis, Fondants, fetthaltige oder nicht-fetthaltige Füllungen für Kuchen oder Bonbons, gelierte Produkte, kandierte Früchte oder Lösungen zum Überziehen mit einer Zuckerschicht umfaßt.

10. Konzentrierte Süßungsmittel-Zusammensetzung, dadurch gekennzeichnet, daß sie enthält:

14

- einen Sirup aus einem hydrierten Stärkehydrolysat, welcher mehr als 30 Gew.-%,vorzugsweise mehr als 50 Gew.-% und in noch höher bevorzugtem Maße mehr als 70 Gew.-%, bezogen auf die Trockensubstanz des Hydrolysates, an Molekülen mit einem Polymerisationsgrad von gleich zwei enthält;
- 1 % bis 50 Gew.-%, vorzugsweise 5 bis 45 Gew.-% und in noch höher bevorzugtem Maße 10 bis 40 Gew.-%, bezogen auf die Trockensubstanz der Zusammensetzung, an wenigstens einem $C_4$- oder $C_5$-Zuckeralkohol, wobei dieser Zuckeralkohol vorzugsweise Xylit ist; und
- Wasser in einer Menge von 6 bis 11 Gew.-% der Zusammensetzung.

## Claims

1. Use of a concentrated sweetening composition comprising a syrup of hydrogenated starch hydrolysate and from 1 to 50%, preferably from 5 to 45%, and still more preferably from 10 to 40% by weight with respect to the total dry matter, of at least one itol in $C_4$ or $C_5$, in order to provide the foodstuffs to which it is intended to be incorporated, with a sufficient stability when stored, especially with respect to the uptake of water which leads to a degradation of the quality of the said products and with respect to the phenomenon of crystallization.

2. Use according to claim 1, of a concentrated sweetening composition comprising a syrup of hydrogenated starch hydrolysate and from 1 to 50%, preferably from 5 to 45%, and still more preferably from 10 to 40% by weight with respect to the total dry matter, of at least one itol in $C_4$ or $C_5$ and having a water content from 4 to 16% by weight.

3. Use according to claim 1, of a concentrated sweetening composition comprising a syrup of hydrogenated starch hydrolysate and from 1 to 50%, preferably from 5 to 45%, and still more preferably from 10 to 40% by weight with respect to the total dry matter, of at least one itol in $C_4$ or $C_5$ and having a water content from 6 to 11% by weight.

4. Use according to claim 1, of a concentrated sweetening composition comprising a syrup of hydrogenated starch hydrolysate and from 1 to 50%, preferably from 5 to 45%, and still more preferably from 10 to 40% by weight with respect to the total dry matter, of at least one itol in $C_4$ or $C_5$ selected from the group comprising erythritol, threitol, arabitol, ribitol and xylitol, xylitol being preferred.

5. Use according to claim 1, of a concentrated sweetening composition comprising a syrup of hydrogenated starch hydrolysate and from 1 to 50%, preferably from 5 to 45%, and still more preferably from 10 to 40% by weight with respect to the total dry matter, of at least one itol in $C_4$ or $C_5$ selected from the group comprising erythritol, threitol, arabitol, ribitol and xylitol, and having a water content from 4 to 16%, preferably from 6 to 11% by weight.

6. Use according to claim 1, of a concentrated sweetening composition comprising a syrup of hydrogenated starch hydrolysate and from 30 to 35% by weight of xylitol with respect to the total dry matter, its water content being from 4 to 16%, preferably from 6 to 11% by weight.

7. Use according to claim 1, of a concentrated sweetening composition comprising a syrup of hydrogenated starch hydrolysate having more than 30%, preferably more than 50% and, still more preferably, more than 70% by weight of molecules having a degree of polymerization equal to 2, as well as from 1 to 50%, preferably from 5 to 45% and, still more preferably, from 10 to 40% by weight with respect to its total dry matter, of at least one itol in $C_4$ or $C_5$ selected from the group comprising erythritol, threitol, arabitol, ribitol and xylitol, preferably from 30 to 35% by weight of xylitol with respect to the total dry matter, its water content being from 4 to 16%, preferably from 6 to 11% by weight.

8. Use according to claim 1, of a concentrated sweetening composition comprising a syrup of hydrogenated starch hydrolysate having more than 30%, preferably more than 50% and, still more preferably, more than 70% by weight of molecules having a degree of polymerization equal to 2, as well as from 1 to 50%, preferably from 5 to 45% and, still more preferably, from 10 to 40% by weight with respect to its total dry matter, of at least one itol in $C_4$ or $C_5$ selected from the group comprising erythritol, threitol, arabitol, ribitol and xylitol, preferably from 30 to 35% by weight of xylitol with respect to the total dry matter, its water content being from 4 to 16%, preferably from 6 to 11% by weight, the said composition moreover comprising a substance such as glycerol or propyleneglycol at a concentration lower than 4% by weight with respect to the dry matter.

9. Use according to one of claims 1 to 8, the foodstuff to which the concentrated sweetening composition is intended to be incorporated, being selected from the group comprising the chewing-gums, the fondants, the fat or non fat fillings, the gellified articles, the crystallized fruits or the coating solutions.

10. Concentrated sweetening composition characterized by the fact that it comprises:
   - a syrup of hydrogenated starch hydrolysate containing more than 30%, preferably more than 50% and, still more preferably, more than 70% by weight with respect to the dry hydrolysate, of molecules having a degree of polymerization equal to 2,
   - from 1 to 50%, preferably from 5 to 45%, and still more preferably from 10 to 40% by weight with respect to the dry matter of the composition, of at least one itol in $C_4$ or $C_5$, this itol being preferably xylitol, and
   - water, at the rate of 6 to 11% by weight of the composition.